# EUROPÄISCHE PATENTSCHRIFT

(11) **EP 1 961 025 B1**
(45) Veröffentlichungstag und Bekanntmachung des Hinweises auf die Patenterteilung: **30.03.2016**
(21) Anmeldenummer: 06776276.5
(22) Anmeldetag: 18.07.2006
(51) Int. Cl.: H01H 25/06, H01H 9/18, G05G 1/08, G05G 5/03, G05G 5/06

(54) **BEDIENKNOPF MIT INTEGRIERTER FUNKTIONALITÄT**
CONTROL BUTTON COMPRISING INTEGRATED FUNCTIONALITY
BOUTON DE COMMANDE A FONCTIONNALITE INTEGREE

(30) Priorität: 19.07.2005 DE 102005033552; 21.04.2006 DE 102006018518
(43) Veröffentlichungstag der Anmeldung: 27.08.2008
(73) Patentinhaber: Preh GmbH, 97616 Bad Neustadt a. d. Saale (DE)
(72) Erfinder: SCHELBERT, Harald, 97631 Bad Königshofen (DE); KRAMLICH, Andreas, 97424 Schweinfurt (DE); JEITNER, Martin, 97645 Ostheim (DE)
(74) Vertreter: Bauer, Wulf
(86) Internationale Anmeldenummer: PCT/EP2006/007045
(87) Internationale Veröffentlichungsnummer: WO 2007/009745

(56) Entgegenhaltungen:
- DE-U1- 20 014 425
- DE-U1- 20 219 655

## Beschreibung

Die vorliegende Erfindung betrifft einen Bedienknopf für ein Kraftfahrzeug, der eine Vielzahl von Funktionen wie die Erzeugung einer Haptik und verschiedene Betätigungsfunktionen in sich vereint.

In Kraftfahrzeugen werden verschiedenste Funktionen zunehmend über ein einziges Menü in Verbindung mit einem Bordcomputer bedient. Dazu wird oftmals ein zentrales Bedienelement eingesetzt, das eine Vielzahl von Eingabefunktionen in sich vereint, beispielsweise Taster und Drehgeber. Dabei ist die Haptik des Bedienknopfes häufig dynamisch anpassbar, beispielsweise in Form von exponierten Rasten oder von Endanschlägen.

Ein Nachteil der bisher bekannten gattungsgemäßen Bedienelemente ist die aufwändige Adaption an den jeweiligen Fahrzeugtyp. Es ist daher die Aufgabe der vorliegenden Erfindung, einen Bedienknopf bereitzustellen; der eine Vielzahl Funktionalitäten vereint und einfach an das Kraftfahrzeug anpassbar ist.

Gelöst wird diese Aufgabe durch die Merkmale des Patentanspruchs 1. Weitere vorteilhafte Ausgestaltungsformen sind in den abhängigen Patentansprüchen angegeben.

Ein erfindungsgemäßer Bedienknopf zur Verwendung an einem Kraftfahrzeug weist eine Nabe zur Anbringung des Bedienknopfes auf einer Welle, einen drehfesten Teil, einen drehbaren Teil, einen Drehwinkelgeber, Mittel zur Erzeugung einer Drehhaptik sowie eine Elektronik, mittels der die im Bedienknopf angeordneten Komponenten ansteuerbar und die Signale der Signalgeber auswertbar sind und über die der Bedienknopf an eine Elektronik des Kraftfahrzeugs anschließbar ist, auf.

Mit seiner Nabe wird der Bedienknopf auf die Welle aufgesteckt und so im Kraftfahrzeug befestigt. Die Nabe ist entweder starr oder in eine oder mehrere Richtungen kippbar gelagert, so dass bei einer kippbar gelagerten Welle der Bedienknopf als Handhabe eines Joysticks dient. Der drehfeste Teil des Bedienknopfes ist nicht um die Welle drehbar, während der drehbare Teil relativ zum drehfesten Teil drehbar angeordnet ist. Bei dem drehbaren Teil handelt es sich bevorzugt um einen Ring, der einen Teil der Umfangsfläche des Bedienknopfes bildet.

Mittels des Drehwinkelgebers ist die Drehstellung des drehbaren Teils detektierbar. Dazu ist der Drehwinkelgeber als Absolutwertgeber oder als inkrementeller Drehwinkelgeber ausgebildet. Ein Absolutwertgeber liefert den absoluten Drehwinkel des drehbaren Teils, während ein inkrementeller Drehwinkelgeber eine Drehung um ein bestimmtes Maß signalisiert. Das oder die Mittel zur Erzeugung einer Drehhaptik geben dem Benutzer eine taktile Rückmeldung über die Betätigung des drehbaren Teils.

Die Elektronik dient der Ansteuerung der im Bedienknopf angeordneten Komponenten wie beispielsweise den Mitteln zur Erzeugung der Drehhaptik. Außerdem wertet die Elektronik die Signale der Signalgeber, beispielsweise des Drehwinkelgebers, aus und bereitet diese so auf, dass sie direkt an die Bordelektronik des Kraftfahrzeugs übertragen werden können.

Dabei erfolgt die Anbindung des Bedienknopfes an die Bordelektronik bevorzugt über einen Datenbus. Die Elektronik des Bedienknopfes ist nun vorteilhaft so ausgestaltet, das sie die gewünschte Haptik des Bedienknopfes über den Datenbus empfängt und die Komponenten entsprechend ansteuert sowie Informationen über eine Betätigung des Bedienknopfes in einer entsprechenden Nachricht über den Datenbus versendet. Der Bedienknopf ist somit an einen Fahrzeugtyp adaptierbar, indem die Elektronik entsprechend der Bordelektronik gestaltet beziehungsweise programmiert wird.

In einer Ausgestaltung der Erfindung wird ein Mittel zur Erzeugung der Drehhaptik durch eine mit einer Rastkontur zusammenwirkende Rastfeder gebildet. Dabei greift die Rastfeder in die Rastkontur ein und wird bei der Drehung des drehbaren Teils verformt, wodurch sich ein definierter Drehwiderstand ergibt. Dieses Prinzip zur Rasterzeugung ist dem Fachmann geläufig und wird daher nicht weiter ausgeführt. Bevorzugt ist die Rastfeder im drehfesten Teil des Bedienknopfes angeordnet und die Rastkontur in den drehbaren Teil eingebracht.

In einer weiteren Ausgestaltungsform ist im Bedienknopf ein zustellbarer Stößel angeordnet, der in Eingriff mit der Rastkontur bringbar ist. Ist der zustellbare Stößel im Eingriff mit der Rastkontur, so wird der Drehung des drehbaren Teils eine zusätzliche Kraft entgegen gesetzt. Diese Gegenkraft nimmt der Benutzer als besondere Rast wahr, beispielsweise als Mittenrast. Der zustellbare Stößel wird beispielsweise mittels eines Elektrönmagneten in Eingriff mit der Rastkontur gebracht beziehungsweise aus diesem entfernt. Eine detaillierte Beschreibung des Funktionsprinzips findet sich in der deutschen Patentanmeldung 10 2005 043 587.4 der Anmelderin.

In einer weiteren Ausgestaltungsform der Erfindung weist der Bedienknopf eine Sperrvorrichtung zum Sperren der Drehung des drehbaren Teils auf. Durch diese Sperrvorrichtung werden dynamisch zuschaltbare und frei positionierbare Endanschläge realisiert, die zur Erzeugung der Drehhaptik beitragen. Bevorzugt wird die Sperrvorrichtung durch mindestens einen Elektromagneten gebildet, durch den eine Kugel in Eingriff mit einer am drehbaren Teil angeordneten Sperrkontur bringbar ist. Der Elektromagnet zieht dabei die Kugel in eine Position, in der sie zwischen der Sperrkontur im drehbaren Teil und dem drehfesten Teil verklemmt und somit eine weitere Drehung des drehbaren Teils blockiert. Das Funktionsprinzip und die Ausgestaltung einer derartigen Sperrvorrichtung sind detailliert in der deutschen Patentanmeldung 10 2005 024 883.5 der Anmelderin beschrieben.

In einer anderen Ausgestaltung der Sperrvorrichtung wird ein Permanentmagnet mittels eines Elektromagneten zwischen zwei Positionen verfahren. Eine Kugel folgt der Position des Permanentmagneten und wechselt somit ebenfalls zwischen zwei Positionen. In einer Position ist die Kugel zwischen dem drehfesten Teil des Bedienknopfes und der Sperrkontur verklemmt, so dass die Drehung des drehbaren Teils blockiert wird. In der zweiten Position der Kugel wird die Drehung freigegeben. Das Funktionsprinzip sowie beispielhafte Ausgestaltungsformen einer derartigen Sperrvorrichtung werden in der deutschen Patentanmeldung 10 2006 015 294.8 der Anmelderin detailliert beschrieben.

Das Dokument DE 20 219 655 U zeigt den Oberbegriff des Anspruchs 1.

In der Erfindung ist die Sperrkontur an einer ringförmig ausgebildeten Stirnfläche des drehbaren Teils angeordnet. Die Stirnfläche befindet sich beispielsweise als Fortsatz eines vom Benutzer bedienbaren Bereiches des drehbaren Teils im Inneren des Bedienknopfes. Bevorzugt ist die Sperrkontur so ausgestaltet, dass die durch sie ermöglichten Endanschläge mit den durch die Rastkontur und die Rastfeder erzeugten Rastpositionen übereinstimmen.

In einer weiteren Ausführungsform der Erfindung ist auf der Oberseite des Bedienknopfes ein Symbol angeordnet. Bevorzugt wird dieses Symbol durch ein Leuchtmittel beleuchtet, wobei insbesondere unterschiedliche Such- und Funktionsbeleuchtungen erzeugbar sind. Die Ansteuerung des Leuchtmittels erfolgt ebenfalls durch die Elektronik des Bedienknopfes.

In einer Abwandlung der vorstehenden Ausführungsform sind im Bedienknopf Mittel zur Anzeige eines veränderlichen Symbols auf der Oberseite des Bedienknopfes angeordnet

Diese Mittel bestehen beispielsweise aus einem Display und einer oder mehreren Lichtquellen zur Durchleuchtung des Displays. Bevorzugt sind in der Elektronik des Bedienknopfes, die das Display oder die Lichtquellen ansteuert, verschiedene Symbole hinterlegt. Über den Datenbus teilt die Bordelektronik des Kraftfahrzeugs dem Bedienknopf mit, welches des Symbole anzuzeigen ist. Alternativ oder zusätzlich überträgt die Bordelektronik über den Datenbus das vollständige Symbol in einem festgelegten Format an den Bedienknopf. Dadurch ist es möglich, beispielsweise bei einem Update der Betriebssoftware des Kraftfahrzeugs neue Symbole hinzuzufügen, die bei der Montage des Bedienknopfes im Kraftfahrzeug noch nicht zur Verfügung gestanden haben. Mögliche Ausgestaltungsformen der Mittel zur Anzeige des veränderlichen Symbols sind den deutschen Patentanmeldungen 103 42 142.4 oder 10 2005 043 588.2 der Anmelderin zu entnehmen.

In einer Ausgestaltungsform der Erfindung weist der Bedienknopf einen Taster auf, insbesondere an der Oberseite des Bedienknopfes. Dazu ist eine Tastenkappe, die bevorzugt einen Teil der Oberseite des Bedienknopfes bildet, relativ zum restlichen Bedienknopf translatorisch bewegbar. Die Betätigung des Tasters ist mit Hilfe eines Schaltmittels detektierbar. Das Schaltmittel wirkt als Signalgeber, dessen Signal die Elektronik des Bedienknopfes auswertet und an die Bordelektronik des Kraftfahrzeugs übermittelt.

In einer alternativen Ausgestaltungsform ist der Bedienknopf entlang der Welle relativ zur Nabe verschiebbar. Dadurch wird nicht eine Tastenkappe relativ zum Rest des Bedienknopfes bewegt, sondern der gesamte Bedienknopf relativ zu der Nabe, mit der er auf der Welle befestigt ist.

Die Elektronik des Bedienelementes empfängt einerseits Befehle von der Bordelektronik über das gewünschte Verhalten des Bedienelementes. Daraus erzeugt sie Ansteuersignale für die Komponenten wie einen zustellbaren Stößel, einen Elektromagnet einer Sperrvorrichtung, ein Leuchtmittel oder ein Display. Andererseits wertet die Elektronik die Ausgangssignale der Komponenten wie dem Drehwinkelgeber und einem Schalter oder Taster aus und überträgt die entsprechenden Informationen an die Bordelektronik.

Die vorliegende Erfindung soll anhand zweier Ausführungsbeispiele näher erläutert werden.

Dabei zeigt
- Figur 1: eine Schnittdarstellung eines erfindungsgemäßen Bedienknopfes,
- Figur 2: eine andere Schnittdarstellung des Bedienknopfes aus Figur 1 entlang der Linie A-A,
- Figur 3: die Schnittdarstellung einer anderen Ausführungsform eines erfindungsgemäßen Bedienknopfes,
- Figur 4: eine andere Schnittdarstellung des Bedienknopfes aus der Figur 3 entlang der Linie B-B und
- Figur 5: die Darstellung eines Displays bei Bedienung eines Radios.

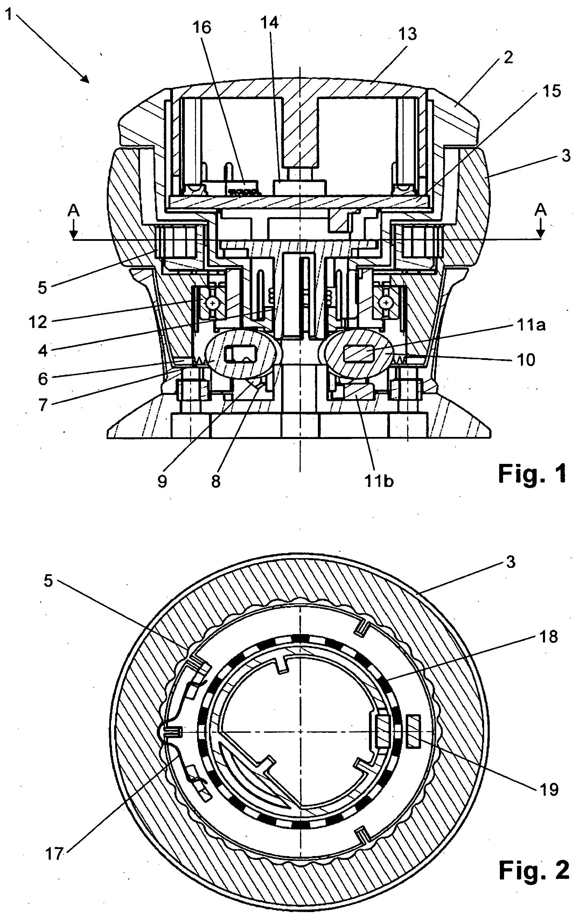

Figur 1 zeigt eine Schnittdarstellung eines erfindungsgemäßen Bedienknopfes 1 mit einem drehfesten Teil 2, einem drehbaren Teil 3 und einer Nabe 4. Mittels der Nabe 4 wird der Bedienknopf 1 auf eine nicht dargestellten Welle aufgesteckt. Diese Welle ist entweder fest oder kippbar im Kraftfahrzeug gelagert. Bei einer kippbaren Lagerung dient der Bedienknopf 1 zusätzlich zu seiner eigenen Funktionalität als Handhabe eines Joysticks.

Ein ringförmig ausgebildeter Bereich des drehbaren Teils 3 bildet einen Bereich der Außenseite des Bedienknopfes 1 und ist dort vom Benutzer drehbar. Der im Inneren des Bedienknopfes 1 verlaufende Bereich des drehbaren Teils 3 ist über ein Lager 12, beispielsweise ein Kugellager, mit dem drehfesten Teil 2 des Bedienknopfes verbunden. Der drehbare Teil 3 reicht nicht bis an die Oberseite des Bedienknopfes 1, wodurch erreicht wird, dass der drehbare Teil 3 beim Kippen oder Drücken des Bedienknopfes 1 vom Benutzer nicht unbeabsichtigt verstellt wird.

An einem inneren Umfang des drehbaren Teils 3 ist eine Rastkontur 5 eingebracht. Diese ist insbesondere in Figur 2 zu erkennen, die eine alternative Schnittdarstellung des Bedienknopfes 1 entlang des Linie A-A darstellt. In die Rastkontur 5 greift eine vorgespannte Rastfeder 7 ein, die bei der Drehung des drehbaren Teils 3 durch die Flanken der Rastkontur 5 elastisch verformt wird und der Drehung so eine Kraft entgegensetzt. Diese Kraft ist vom Benutzer als Drehhaptik wahrnehmbar und erzeugt Rastpositionen des drehbaren Teils 3.

Die Drehung des drehbaren Teils 3 ist mittels einer Sperrvorrichtung sperrbar. Die Sperrvorrichtung besteht aus den beiden Elektromagneten 7 und 10, mittels derer jeweils eine Kugel in Eingriff mit einer am drehbaren Teil 3 angeordneten Sperrkontur 6 bringbar ist. Der Elektromagnet 7 bewegt die Kugel 9, die vom Elektromagneten 10 bewegte Kugel ist in Figur 1 verdeckt. Die Sperrkontur 6 ist an einer ringförmig ausgebildeten Stirnfläche des drehbaren Teils 3 angeordnet. Jeder der Elektromagneten 7 und 10 sperrt eine Drehrichtung des drehbaren Teils 3. Der Elektromagnet 10 ist auf einen U-förmigen Eisenkern mit den Schenkeln 11a und 11b aufgeschoben. Durch eine unterschiedliche Bestromung des Elektromagneten 10 ist die Richtung des Magnetfeldes im Eisenkern umkehrbar. Je nach Richtung des Magnetfeldes im Eisenkern bewegt sich ein nicht dargestellter Permanentmagnet zwischen einer oberen Position vor Schenkel 11 a und einer unteren Position vor Schenkel 11b. Zur Erläuterung des Funktionsprinzips der Sperrvorrichtung wurde der Eisenkern des Elektromagneten 7 in Figur 1 weggelassen. Auch mittels des Elektromagneten 7 ist ein nicht dargestellter Permanentmagnet zwischen einer oberen und einer unteren Position verfahrbar. Der Bewegung des Elektromagneten folgt eine magnetisierbare Kugel 9. In der oberen Position des Permanentmagneten und damit der Kugel 9 greift die Kugel 9 in die Sperrkontur 6 ein und blockiert so die Drehung des drehbaren Teils 3. In der unteren Position des Permanentmagneten liegt die Kugel 9 in der Tasche 8, wo sie die Drehung des drehbaren Teils 3 nicht behindert.

Der Bedienknopf 1 weist weiterhin Drehwinkelgeber auf, mittels dessen eine Drehung des drehbaren Teils detektierbar ist. Im vorliegenden Ausführungsbeispiel besteht der Drehwinkelgeber aus einer im drehfesten Teil 2 angeordneten Lichtschranke 19 und einem am drehbaren Teil 3 angeordneten Kodierring 18. Der Kodierring 18 bewegt sich bei einer Drehung der drehbaren Teils 3 durch den Erfassungsbereich der Lichtschranke 19. Durch Ausnehmungen im Kodierring 18 verändert sich das Ausgangssignal der Lichtschranke 19, woraus der Drehwinkel und die Drehrichtung des drehbaren Teils 3 bestimmt wird. Diese Bestimmung ist dam Fachmann bekannt und wird daher hier nicht näher ausgeführt.

Der Bedienknopf 1 weist zusätzlich einen Taster auf, mit dem beispielsweise eine ausgewählte Funktion des Bordcomputers aktivierbar ist. Der Taster besteht aus einer Tastenkappe 13, die in den drehfesten Teil 2 hineindrückbar ist, und einem Schalter 14. Der Schalter 14 detektiert einerseits eine Betätigung der Tastenkappe 13 und bringt diese andererseits nach ihrer Betätigung in ihre Ausgangslage zurück.

Die Leiterplatte 15 trägt die Elektronik 16 des Bedienknopfes, die sämtliche Komponenten des Bedienknopfes 1 ansteuert und die Signale der Signalgeber auswertet. Darüber hinaus stellt sie den elektronischen Kontakt zur Bordelektronik des Kraftfahrzeugs her, beispielsweise über einen Datenbus. Die Elektronik 16 erhält vom Bordcomputer Informationen darüber, welche Funktionen der Bedienknopf 1 aktuell bereitstellen soll, und steuert die Komponenten wie beispielsweise die Elektromagneten 7 und 10 entsprechend an. Darüber hinaus wertet die Elektronik 16 das Signal der Lichtschranke 19 und des Schalters 14 aus. Die ausgewerteten Daten werden über den Datenbus an die Bordelektronik des Kraftfahrzeugs übertraggen. Der Bedienknopf 1 ist also mit nur geringen Modifikationen in einer Vielzahl von Kraftfahrzeugen einsetzbar. Lediglich die Schnittstelle für die Anbindung an den Fahrzeugbus muss angepasst werden:

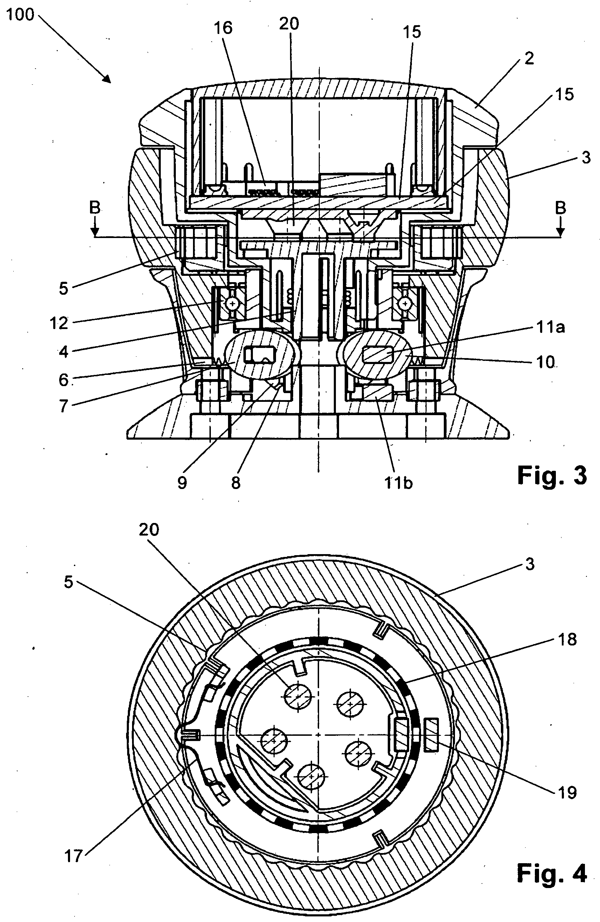

Die Figuren 3 und 4 zeigen eine Modifikation des Bedienknopfes 1 analog zu den Figuren 1 und 2. Der Aufbau des Bedienknopfes 100 entspricht im Wesentlichen dem des Bedienknopfes 1, jedoch ohne die Tastenkappe 13 und den Schalter 14. Gleiche oder gleichwirkende Komponenten sind mit den gleichen Bezugszeichen versehen. Der Bereich, den bei Bedienknopf 1 die Tastenkappe 13 bildet, ist beim Bedienknopf 100 starr mit dem drehfesten Teil 2 verbunden. Dahingegen ist der Bedienknopf 100 mit seinem drehfesten Teil 2 und seinem drehbaren Teil 3 translatorisch gegenüber der Nabe 4 und somit entlang der Welle verschiebbar. Damit wird die Tastfunktion durch Drücken des im Wesentlichen gesamten Bedienknopfes 100 ausgeführt. Bei Drücken des Bedienknopfes 100 werden die Kontaktdome der Schalter 20 gegen eine feststehende Platte der Nabe 4 gedrückt und lösen somit eine Tastfunktion aus, die von der Elektronik 16 detektiert wird. Die Schalter 20 bringen gleichzeitig eine Rückstellkraft auf, die den Bedienknopf 100 nach dem Drücken in seine Ausgangsposition zurückbringen.

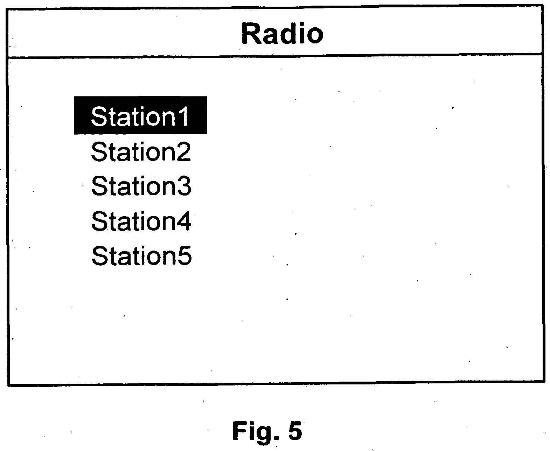

Figur 5 zeigt die beispielhafte Anwendung des Bedienknopfes 1 beziehungsweise 100. Im vorliegenden Beispiel soll ein Autoradio bedient werden, in dem ein Radiosender aus einer Liste ausgewählt wird. In Figur 5 ist zu erkennen, dass aktuell die fünf Radiosender Station 1 bis Station 5 empfangbar sind. Momentan ist der Name der Station 1 hervorgehoben. Der Bordcomputer übermittelt der Elektronik 16 des Bedienknopfes 1 bzw. 100, dass sie fünf Rastpositionen des drehbaren Teils 3 zulassen soll und die aktuelle Auswahl der ersten Position entspricht. Daraufhin blockiert die Elektronik 16 die Drehung des drehbaren Teils 3 gegen den Uhrzeigersinn, indem sie den Elektromagneten 7 derart bestromt, dass die Kugel 9 in Eingriff mit der Sperrkontur 6 gelangt. Dreht der Benutzer den drehbaren Teil 3 eine Rast im Uhrzeigersinn, so ermittelt die Elektronik 16 dies anhand des Ausgangssignals der Lichtschranke 19. Die Elektronik 16 signalisiert diese Drehung dem Bordcomputer, der daraufhin die Markierung auf Station 2 setzt. Die weitere Drehung des drehbaren Teils 3 im Uhrzeigersinn ist möglich, bis Station 5 markiert ist und mittels des Elektromagneten 10 eine weitere Drehung des drehbaren Teils 3 verhindert wird. Wählt der Benutzer eine Station durch Drücken der Tastenkappe 13 bzw. des gesamten Bedienknopfes 100 aus, so übermittelt die Elektronik 16 dies an den Bordcomputer, der daraufhin zum ausgewählten Radiosender wechselt.

Die vorausgegangenen Ausführungsbeispiele sind rein exemplarisch und insofern nicht beschränkend. Dies betrifft insbesondere die Verwendung des erfindungsgemäßen Bedienknopfes, die sich über die Auswahl eines Radiosenders hinaus auf jede Bedienung eines Bordcomputers oder eines anderen Gerätes erschreckt. Ebenso kann der Aufbau des Bedienknopfes von den in den Figuren 1 bis 4 dargestellten Formen abweichen, ohne den Erfindungsgedanken zu verlassen. So kann beispielsweise in die Oberseite des Bedienknopfes ein Symbol, insbesondre ein beleuchtbares Symbol eingelassen sein. Weiterhin ist es möglich, mittels eines Displays ein variables Symbol auf die Oberseite des Bedienknopfes zu projizieren. Weiterhin können im Bedienknopf Mittel zur Erzeugung einer exponierten Rast, beispielsweise einer Mittenrast, vorhanden sein. Die Ansteuerung dieser zusätzlichen Komponenten wird ebenfalls von der Elektronik des Bedienknopfes übernommen.

## Patentansprüche

1. Bedienknopf (1, 100) zur Verwendung in einem Kraftfahrzeug, aufweisend eine Nabe (4) zur Anbringung des Bedienknopfes (1, 100) auf einer Welle, einen drehfesten Teil (2), einen drehbaren Teil (3), einen Drehwinkelgeber, Mittel zur Erzeugung einer Drehhaptik (5, 17) sowie eine Elektronik (16), mittels der die im Bedienknopf (1, 100) angeordnete Komponenten (7, 10) ansteuerbar und die Signale der Signalgeber (14, 19, 20) auswertbar sind, wobei der Bedienknopf (1, 100) über die Elektronik an die Bordelektronik des Kraftfahrzeugs über einen Datenbus anschließbar ist, wobei die Elektronik (16) ausgelegt ist, die gewünschte Haptik über den Datenbus zu empfangen, die Komponenten (7, 10) entsprechend anzusteuern und Informationen über die Betätigung des Bedienknopfs über den Datenbus zu versenden, **dadurch gekennzeichnet, dass** der drehbare Teil (3) ein Ring ist, in dessen Innerem der drehfeste Teil (2) angeordnet ist.

2. Bedienknopf (1, 100) nach Anspruch 1, **dadurch gekennzeichnet, dass** das Mittel zur Erzeugung der Drehhaptik durch eine mit einer Rastkontur (5) zusammenwirkende Rastfeder (17) gebildet wird.

3. Bedienknopf (1, 100) nach Anspruch 2, **gekennzeichnet durch** einen zustellbaren Stößel, der in Eingriff mit der Rastkontur (5) bringbar ist.

4. Bedienknopf (1, 100) nach einem der Ansprüche 1 bis 3, **gekennzeichnet durch** eine Sperrvorrichtung zum Sperren der Drehung des drehbaren Teils des Bedienknopfes.

5. Bedienknopf (1, 100) nach Anspruch 4, **dadurch gekennzeichnet, dass** die Sperrvorrichtung durch mindestens einen Elektromagneten (7,10) gebildet wird, durch den eine Kugel (9) in Eingriff mit einer am drehbaren Teil (3) angeordneten Sperrkontur (6) bringbar ist.

6. Bedienknopf (1, 100) nach Anspruch 5, **dadurch gekennzeichnet, dass** die Sperrkontur (6) an einer ringförmig ausgebildeten Stirnfläche des drehbaren Teils (3) angeordnet ist.

7. Bedienknopf (1, 100) nach einem der Ansprüche 1 bis 6, **gekennzeichnet durch** Mittel zur Anzeige eines veränderlichen Symbols auf der Oberseite des Bedienknopfes.

8. Bedienknopf (1, 100) nach einem der Ansprüche 1 bis 7, **gekennzeichnet durch** einen Taster, insbesondere an der Oberseite des Bedienknopfes.

9. Bedienknopf (1, 100) nach einem der Ansprüche 1 bis 7, **dadurch gekennzeichnet, dass** der Bedienknopf (1, 100) entlang der Welle relativ zur Nabe (4) verschiebbar ist.

## Claims

1. A control knob (1, 100) for use in a motor vehicle, comprising a hub (4) for attaching the control knob (1, 100) to a shaft, a non-rotatable part (2), a rotatable part (3), a rotary angle encoder, means for generating rotary haptics (5, 17) and an electronic system (16) by means of which the components (7, 10) disposed in the control knob (1, 100) can be controlled and the signals of the signal encoders (14, 19, 20) can be evaluated, wherein the control knob (1, 100) can be connected, via the electronic system, to the on-board electronic system of the motor vehicle via a data bus, wherein the electronic system (16) is designed to receive the desired haptics via the data bus, to control the components (7, 10) accordingly and to transmit information about the actuation of the control knob via the data bus, **characterized in that** the rotatable part (3) is a ring in whose interior the non-rotatable part (2) is disposed.

2. The control knob (1, 100) according to claim 1, **characterized in that** the means for generating rotary haptics is formed by a detent spring (17) cooperating with a detent contour (5).

3. The control knob (1, 100) according to claim 2, **characterized by** an adjustable tappet that can be brought into engagement with the detent contour (5).

4. The control knob (1, 100) according to any one of the claims 1 to 3, **characterized by** a locking device for locking the rotation of the rotatable part of the control knob.

5. The control knob (1, 100) according to claim 4, **characterized in that** the locking device is formed by at least one electromagnet (7, 10) by means of which a ball (9) can be brought into engagement with a locking contour (6) disposed on the rotatable part (3).

6. The control knob (1, 100) according to claim 5, **characterized in that** the locking contour (6) is disposed on an annularly configured end face of the rotatable part (3).

7. The control knob (1, 100) according to any one of the claims 1 to 6, **characterized by** means for indicating a variable symbol on the top side of the control knob.

8. The control knob (1, 100) according to any one of the claims 1 to 7, **characterized by** a push button, particularly on the top side of the control knob.

9. The control knob (1, 100) according to any one of the claims 1 to 7, **characterized in that** the control knob (1, 100) can be displaced relative to the hub (4) along the shaft.

## Revendications

1. Bouton de commande (1, 100) destiné à être utilisé dans un véhicule automobile, comprenant un moyeu (4) de montage du bouton de commande (1, 100) sur un arbre, une partie (2) fixe en rotation, une partie (3) rotative, un capteur d'angle de rotation, des moyens de génération d'une haptique de rotation (5, 17) ainsi qu'une électronique (16) au moyen de laquelle les composants (7, 10) disposés dans le bouton de commande (1, 100) peuvent être commandés et les signaux des générateurs de signaux (14, 19, 20) peuvent être évalués, ledit bouton de commande (1, 100) pouvant être connecté par l'électronique à l'électronique de bord du véhicule automobile via un bus de données, ladite électronique (16) étant configurée pour recevoir l'haptique souhaitée via le bus de données, pour commander les composants (7, 10) de manière correspondante et pour émettre, via le bus de données, des informations relatives à l'actionnement du bouton de commande, **caractérisé par le fait que** ladite partie (3) rotative est un anneau dans l'intérieur duquel est disposée ladite partie (2) fixe en rotation.

2. Bouton de commande (1, 100) selon la revendication 1, **caractérisé par le fait que** le moyen de génération de l'haptique de rotation est formé par un ressort d'arrêt (17) agissant de concert avec un contour d'arrêt (5).

3. Bouton de commande (1, 100) selon la revendication 2, **caractérisé par** un poussoir apte à être avancé qui peut être mis en prise avec ledit contour d'arrêt (5).

4. Bouton de commande (1, 100) selon l'une quelconque des revendications 1 à 3, **caractérisé par** un dispositif de blocage pour bloquer la rotation de la partie rotative du bouton de commande.

5. Bouton de commande (1, 100) selon la revendication 4, **caractérisé par le fait que** ledit dispositif d'arrêt est formé par au moins un électroaimant (7, 10) par l'intermédiaire duquel une bille (9) peut être mise en prise avec un contour de blocage (6) disposé sur ladite partie (3) rotative.

6. Bouton de commande (1, 100) selon la revendication 5, **caractérisé par le fait que** le contour de blocage (6) est disposé sur une face frontale réalisée en anneau de ladite partie (3) rotative.

7. Bouton de commande (1, 100) selon l'une quelconque des revendications 1 à 6, **caractérisé par** des moyens d'affichage d'un symbole variable sur la face supérieure du bouton de commande.

8. Bouton de commande (1, 100) selon l'une quelconque des revendications 1 à 7, **caractérisé par** un bouton-poussoir, en particulier sur la face supérieure du bouton de commande.

9. Bouton de commande (1, 100) selon l'une quelconque des revendications 1 à 7, **caractérisé par le fait que** le bouton de commande (1, 100) est déplaçable le long de l'arbre par rapport au moyeu (4).
